# EUROPÄISCHE PATENTSCHRIFT

(11) **EP 2 268 406 B1**
(45) Veröffentlichungstag und Bekanntmachung des Hinweises auf die Patenterteilung: **19.04.2017**
(21) Anmeldenummer: 09731075.9
(22) Anmeldetag: 21.03.2009
(51) Int. Cl.: B03B 9/06, B29B 17/02

(54) **VERFAHREN UND ANLAGE ZUR AUFBEREITUNG VON KUNSTSTOFFREICHEN ABFÄLLEN**
METHOD AND ARRANGEMENT FOR TREATING PLASTIC-RICH WASTE
PROCÉDÉ ET INSTALLATION POUR LE TRAITEMENT DE DÉCHETS À TENEUR ÉLEVÉE EN MATIÈRES PLASTIQUES

(30) Priorität: 12.04.2008 DE 102008018527; 02.06.2008 DE 102008026416; 02.06.2008 DE 102008026417
(43) Veröffentlichungstag der Anmeldung: 05.01.2011
(73) Patentinhaber: Volkswagen Aktiengesellschaft, 38440 Wolfsburg (DE); SiCon GmbH, 57271 Hilchenbach (DE)
(72) Erfinder: GUSCHALL, Heiner, 57271 Hilchenbach (DE); GOLDMANN, Daniel, 38640 Goslar (DE)
(86) Internationale Anmeldenummer: PCT/EP2009/002104
(87) Internationale Veröffentlichungsnummer: WO 2009/124651

(56) Entgegenhaltungen:
- EP-A1- 0 479 293
- EP-A2- 0 884 107
- EP-B1- 1 333 931
- DE-A1- 4 100 346
- DE-C2- 19 629 473

## Beschreibung

Die Erfindung betrifft ein Verfahren und eine Anlage zur Aufbereitung einer Leichtfraktion, die während der Aufbereitung von metallarmen, kunststoffreichen Abfällen erzeugt wurde.

Eine solche Leichtfraktion fällt beispielsweise beim Shreddern von Altfahrzeugen an. Das Shreddern von Altfahrzeugen und ähnlichen Stoffströmen zum Materialaufschluss mit dem Ziel verbesserter Materialverwertung ist seit langem bekannt. Die zuvor von lokalen Altauto-Verwertungsbetrieben von wirtschaftlich verwertbaren Teilen (i.w. Ersatzteile) befreiten und schadstoffentfrachteten (z.B. durch Entnahme von Betriebsflüssigkeiten) Altkarossen werden in Shredderbetrieben ohne größere physikalische Vorbehandlung der Shredderanlage zugeführt. Bei den bei der Durchführung des Shredder-Prozesses etablierten Verfahrensführungen wird das anfallende Stoffgemisch in verschiedene Fraktionen aufgeteilt.

Die Altkarosse wird in der nach dem Prinzip einer Hammermühle arbeitenden Shredderanlage in etwa faustgroße Stücke zerschlagen. Im Nachgang des Zerkleinerungsprozesses werden mittels einer geeigneten Absaugvorrichtung flugfähige Bestandteile abgesaugt und über einen Zyklon abgeschieden (die sogenannte Shredder-Leichtfraktion (SLF)). Der verbleibende Luftstrom wird einer Entstaubung zugeführt. Die nicht abgesaugte Fraktion wird anschließend mit einem geeigneten Magnetabscheider in eine ferromagnetische Fraktion (sogenannter Shredder-Schrott (SS)) und eine nicht- ferromagnetische Fraktion (sogenannte Shredder-Schwerfraktion (SSF)) aufgetrennt.

Der Shredder-Schrott (SS) wird direkt als Sekundärrohstoff in Stahlwerken eingesetzt, die Shredder-Schwerfraktion (SSF) wird separat aufbereitet und in metallurgisch verwertbare Metallfraktionen und eine metallabgereicherte Restfraktion getrennt. Neben diesen Rückständen aus der Shredder-Schwerfraktion (SSF) verbleibt die Shredder-Leichtfraktion (SLF) als äußerst heterogenes Gemisch aus Kunststoffen, Schaumstoffen, Gummi, Textilien, Glas, Keramik, Holz, Eisen- und Nichteisenmetallen. Nach bisherigen Konzepten werden die durch die Shredder-Leichtfraktion (SLF) und/oder die Restfraktion aus der Aufbereitung der Shredder-Schwerfraktion (SSF) somit gebildeten, metallurgisch nicht verwertbaren sogenannten Shredder-Rückstände in der Regel als Abfall deponiert oder in Müllverbrennungsanlagen verbrannt. Im Lichte steigender gesetzlicher Anforderungen (beispielsweise EU-Altautorichtlinie), steigender Deponiekosten und steigender Anforderungen an das Deponiegut ist eine möglichst hohe Verwertungsquote aller beim Shredderprozess entstehenden Fraktionen wünschenswert. Die Altautoverordnung vom 01.04.1998 sieht sogar vor, dass ab dem Jahr 2015 über 95 Gew.% eines Altautos verwertet werden müssen. Verschärfte Anforderungen aus der im September 2000 verabschiedeten EU-Altautorichtlinie schreiben darüber hinaus vor, bei der Altautoverwertung den Anteil wieder verwendbarer sowie werk- und rohstofflich nutzbarer Stoffströme auf mindestens 85 Gew.% zu steigern.

Eine Verwertung der Shredder-Leichtfraktion (SLF) in gesicherter Qualität (stofflich, beispielsweise in Hoch- oder Kupolöfen oder auch energetisch beispielsweise zum Einsatz als Brennstoff in Zementwerken oder Kraftwerken) ist nach den derzeitigen Erkenntnissen unter ökologisch und ökonomisch vertretbaren Bedingungen nur dann möglich, wenn die Shredder-Rückstande bzw. die Shredder-Leichtfraktion (SLF) mit Hilfe geeigneter Aufbereitungsschritte in weitmöglichst hochwertige, homogene Teilfraktionen zerlegt werden.

In der EP 1 333 931 B1 wird ein Verfahren zur gemeinsamen Aufbereitung von Shredder-Fraktionen vorgestellt, bei dem u.a. eine qualitativ hochwertige und stofflich oder energetisch verwertbare Flusen-Fraktion erzeugbar ist. Dabei werden in Vorprozessen die Shredder-Leichtfraktion (SLF), die Shredder-Schwerfraktion (SSF) sowie die in den Vorprozessen entstehenden Stoffströme aufbereitet und es wird zumindest in Teilen in einem gemeinsamen Hauptprozess eine Rohflusen-Fraktion durch Abscheidung von wenigstens einer ferromagnetischen Fraktion, einer NE-Metall-haltigen Fraktion, einer Granulat-Fraktion und einer Sand-Fraktion erzeugt. Die so erzeugte, bereits sehr homogene Rohflusen-Fraktion wird in einem weiteren Veredelungsprozess durch die aufeinanderfolgenden Prozessschritte Metallverkugelung, Entstaubung und Dichtetrennung in eine metallhaltige Staub-Fraktion, eine Staub- und metallarme Flusen-Fraktion und eine Metall-Fraktion weiter aufgetrennt. Die dadurch erzeugte hochwertige Flusen-Fraktion ist problemlos stofflich oder energetisch verwertbar.

Die DE 102 24 133 A1 beschreibt ein Verfahren zur Behandlung von Schlamm, das zur effizienten mechanischen Entwässerung im Vorfeld einer späteren thermischen Behandlung des Schlamms dienen soll. Es wird unter anderem vorgeschlagen, dem Schlamm Zusatzstoffe in Form einer nach dem Verfahren der EP 1 333 931 B1 veredelten Flusen-Fraktion zuzuführen. Es wird ferner auch auf die Möglichkeiten einer weiteren Aufbereitung der so vorveredelten Flusenfraktion hingewiesen, was die Verfahrensschritte Prallbehandlung, Siebung und Dichtetrennung umfasst. Die aus der Dichtetrennung gewonnene Leichtfraktion (Flusen) wird mit dem Überlauf aus der Siebung (ebenfalls Flusen) zusammengeführt und den nachgeordneten, alternativen Verfahrensschritten -Zerkleinerung, -Agglomeration, -Pelletieren oder -Brikettieren unterzogen. Des weiteren wird im Falle der Agglomeration vorgeschlagen, dass der Materialaustrag des Agglomerators den weiteren Aufbereitungsstufen -Absiebung nicht agglomerierter, verklumpter Teile, -weitere FE-Metall-Abscheidung sowie -Materialabkühlung während pneumatischer Förderung unterzogen wird.

Aus der DE 197 55 629 A1 ist ein Verfahren zur Aufbereitung der Shredder-Leichtfraktion aus Shredderanlagen bekannt, bei dem die komplexe Shredder-Leichtfraktion durch Zerkleinern und Trennen in die vier Teilfraktionen Shreddersand (i.w. ausgeschleuste Inertmaterialien, wie Glas, Sand, Schmutz), Shreddergranulat (i.w. Kunststoffgranulat), Metallgranulat (i.w. aus abgetrenntem Eisen, Kupfer und Aluminium) und Shredderflusen (flugfähige Leichtstoffe) aufgeteilt wird, wobei die genannten Teilfraktionen so homogen sein sollen, dass sie einer stofflichen und/oder energetischen Verwertung zugeführt werden können.

Schließlich wird in der EP 1 337 341 B1 ein Verfahren zur gemeinsamen Aufbereitung von Shredder-Fraktionen beschrieben, bei dem die während der Aufbereitung der Shredder-Leichtfraktion und der Shredder-Schwerfraktion in Vorprozessen entstehenden primären Stoffströme zumindest in Teilen einem gemeinsamen Hauptprozess zur abschließenden Aufarbeitung zugeführt werden. Als Endprodukte werden mindestens eine ferromagnetische Fraktion, eine Nicht-Eisenmetall-haltige Fraktion, eine Granulat-Fraktion, eine Sand-Fraktion und eine Flusen-Fraktion erzeugt. Es wird darauf hingewiesen, dass die Endprodukte entweder direkt einer stofflichen oder energetischen Verwertung zugeführt oder gegebenenfalls in weiteren Veredelungsschritten zu verwertbaren Produkten hoher Qualität weiterverarbeitet werden können.

Die EP 0 479 293 A1 beschreibt ein Verfahren zur Auftrennung von metallhaltigen Müllkomponenten aus Hausmüll sowie eine entsprechende Anlage zur Durchführung des Verfahrens.

Dabei werden die metallhaltigen Müllkomponenten über ein Förderband einem Überbandmagneten zur Abtrennung leichter Fe-Komponenten und danach einem Trommelmagneten zur Abtrennung schwerer Fe-Komponenten zugeführt. Das verbleibende nicht-magnetische Material wird einem Horizontalgebläse zugeführt, wobei durch den Luftstrom eine Leichtfraktion von schweren Gegenständen abgetrennt wird. Die Leichtfraktion wird anschließend einer Messermühle zugeführt. Nach der Zerkleinerung wird das Material einem Aspirateur (Getreidereinigungsmaschine) mit zwei Schwingsieben und einem Windsichter (Steigsichter) zugeführt, wobei eine Klassierung in mehrere Leichtfraktionsklassen (Kunststoff, Aluminium und nicht flugfähiges Material aus schwereren Metallpartikeln) erfolgt, die einer getrennten Entsorgung zugeführt werden können.

In der DE 196 29 473 C2 sind ein Verfahren und eine Anlage zur Aufbereitung einer beim Kraftfahrzeugrecycling anfallenden Shredder-Leichtfraktion beschrieben. Dabei wird das aufzubereitende Material durch Prall und/oder Schlag zerkleinert, anschließend in eine Leichtfraktion und eine Schwerfraktion getrennt. Die Leichtfraktion wird agglomeriert und die Schwerfraktion ohne Agglomeration trocken aufbereitet, wobei Nichteisenmetalle abgetrennt werden und die Schwerfraktion auf eine vorgebbare Größe verkleinert wird.

Aus der EP 0 884 107 A2 sind ein Verfahren und eine Anlage zur Aufbereitung einer Shredder-Leichtfraktion mit Metallteilen bekannt. Hierbei wird die Shredder-Leichtfraktion zunächst einer Zerkleinerungsstufe zugeführt und die Zerkleinerungsprodukte werden nacheinander einer Fe- und einer NE-Abscheidung unterzogen. Die nicht abgeschiedene Fraktion wird solange einer weiteren Zerkleinerung mit anschließender Fe- und NE-Abscheidung unterzogen, dass neben Fe- und NE-Konzentraten ein Reststoff entsteht, der einer thermischen Verwertung zugeführt werden kann.

Schließlich beschreibt die DE 41 00 346 A1 ein Verfahren zur mechanischen Aufbereitung von unsortiertem Schrott aus elektrische und elektronische Bauteile enthaltenden Geräten.

Das Verfahren ist gekennzeichnet durch manuelle Zerlegung der Geräte in ihre Hauptbestandteile und Sortierung dieser nach geeigneten Fraktionen. Danach folgt eine Vorzerkleinerung des aus den elektrischen und elektronischen Bauteilen bestehenden Elektronikschrotts auf eine Teilegröße kleiner 2-4 cm durch einen Vorshredder sowie eine Abtrennung der groben Fe- und NE-Anteile. Anschließend erfolgt eine Nachzerkleinerung des Restguts auf eine Korngröße unter 1 cm durch einen Feinshredder und wiederum eine Abtrennung eines Fe- sowie eines NE-Anteils. Der Nachzerkleinerung ist schließlich eine Feinzerkleinerung des Restguts durch eine Hammermühle auf eine Korngröße kleiner 100 µm sowie eine Nasstrennung in eine Kunststoff- und eine Metallfraktion nachgeschaltet. Die gewonnene Kunststofffraktion ist weitgehend frei von Metallen und einer thermischen Entsorgung oder Deponierung zugänglich.

Die Aufgabe der Erfindung ist es, ein Verfahren und eine Anlage zur Verfügung zu stellen, mit denen eine Leichtfraktion, die während der Aufbereitung von metallarmen, kunststoffreichen Abfällen erzeugt wurde, noch weiter veredelt werden kann, so dass ein hochreines Endprodukt zur hocheffizienten, stofflichen aber auch besseren energetischen Verwertung erhalten wird. Die Aufgabe wird erfindungsgemäß mit den Merkmalen der unabhängigen Ansprüche 1 und 26 gelöst. Vorteilhafte Aus- und Weiterbildungen sind den Unteransprüchen entnehmbar.

Gemäß dem erfindungsgemäßen Verfahren zur Aufbereitung einer Leichtfraktion (Rohflusen), die während der Aufbereitung von metallarmen, kunststoffreichen Abfällen erzeugt wurde, werden nacheinander zumindest folgende Verfahrensschritte durchgeführt:
- Beanspruchung der Leichtfraktion mittels Prall und/oder Schlag
- Klassierung der Leichtfraktion in zumindest zwei Leichtfraktionsklassen
- Trennung zumindest einer Leichtfraktionsklasse in zumindest eine Staubfraktion und zumindest eine weitere Fraktion, wobei die Trennung der Staubfraktion über eine im wesentlichen kontrollierte Verweilzeit der Leichtfraktionsklasse in wenigstens einem an der Trennung beteiligten Verfahrensmittel erfolgt.

Durch die Trennung zumindest einer Leichtfraktionsklasse in zumindest eine Staubfraktion und zumindest eine weitere Fraktion, wobei die Trennung der Staubfraktion über eine im wesentlichen kontrollierte Verweilzeit der Leichtfraktionsklasse in wenigstens einem an der Trennung beteiligten Verfahrensmittel erfolgt, erhält man ein sehr reines Zwischenprodukt (Zwischenfraktion), was zu einer besseren Verarbeitbarkeit der Zwischenfraktion in darauf folgenden Verfahrensschritten führt. Insgesamt ist dadurch eine deutlich verbesserte stoffliche aber auch energetische Verwertung möglich.

Insbesondere durch die im wesentlichen kontrollierte Verweilzeit der Leichtfraktionsklasse in dem an der Trennung beteiligten Verfahrensmittel ist ein weitgehend reproduzierbares, flexibel auf die Beschaffenheit des jeweils eingebrachten Materials einstellbares Verfahren möglich, was zu einer entscheidenden Qualitätsverbesserung des Ausgangsmaterials führt.

In höchst vorteilhafter Weise ist die Verweilzeit der Leichtfraktionsklasse in dem Verfahrensmittel über eine regelbare Absaugung kontrolliert. Dabei kann die Absaugung zweckmäßigerweise einen Absaugluftstrom aufweisen, der in Abhängigkeit der Dichte bzw. spezifischen Dichte der zumindest einen Leichtfraktionsklasse geregelt wird. Hierbei bietet es sich zweckmäßigerweise an, die Geschwindigkeit des Absaugluftstroms proportional zur Dichte bzw. spezifischen Dichte der zumindest einen Leichtfraktionsklasse zu regeln. Der Absaugluftstrom nimmt also mit steigender Dichte zu und mit fallender Dichte ab.

Durch diese Maßnahme ist sichergestellt, dass die in einen Absaugkanal fallenden Partikel in Ihrer Sinkgeschwindigkeit kontrollierbar gebremst werden und somit auch die Verweilzeit im Absaugkanal kontrolliert ist.

Gemäß einer weiteren vorteilhaften Ausgestaltung der Erfindung ist vorgesehen, dass die Leichtfraktionsklasse neben der Staubfraktion in zumindest eine Leichtgutfraktion und eine Schwergutfraktion getrennt wird. Somit kann die Schwergutfraktion einem anderen, gesonderten Prozess zugeführt und die Leichtgutfraktion einer weiteren vorteilhaften Spezialbehandlung zugeführt werden.

Dies kann beispielsweise höchst vorteilhaft eine Reinigung der Leichtgutfraktion sein.

Zweckmäßigerweise erfolgt die Reinigung trocken, und zwar durch Entstaubung. Dabei wird die Leichtgutfraktion in einer Zentrifuge von schwermetallbehaftetem Staub (dieser ist i.w. Blei- und Zinkhaltig) befreit und das verbleibende, schwermetallabgereicherte Material wird somit höheren Anforderungen an die Umweltverträglichkeit gerecht.

Gemäß einer zweckmäßigen Weiterbildung des Erfindungsgedankens ist vorgesehen, dass die Klassierung der Leichtfraktion durch Siebung, vorzugsweise bei einem Lochdurchmesser von etwa 5-8 mm erfolgt. Bei der Wahl des Lochdurchmessers hat sich gezeigt, dass sich durch die Siebung zumindest eine erste Leichtfraktionsklasse mit einem durchschnittlichen Teilegrößenbereich < 5-8mm und eine zweite Leichtfraktionsklasse mit einem durchschnittlichen Teilegrößenbereich > 5-8mm erzeugen lässt, die gut weiterverarbeitbar bzw. auftrennbar sind.

Die durch die Trennung der Leichtfraktion (Rohflusen) gewonnene Leichtgutfraktion (Flusen) weist vorteilhaft im Mittel ein Schüttgutgewicht von < 250 kg/m3 und die gewonnene Schwergutfraktion (Granulat) im Mittel ein Schüttgutgewicht von > 250 kg/m3, insbesondere > 400 kg/m3 auf.

Bei der weiter zu veredelnden Leichtfraktion (Rohflusen) handelt es sich gemäß einer vorteilhaften Ausbildung der Erfindung um eine faserreiche Leichtfraktion, insbesondere mit einem mittleren Schüttgewicht von < 0,2 t/m³, die bei der Aufbereitung von metallarmen, kunststoffreichen Abfällen (diese sind bevorzugt zumindest zum Teil Shredder-Rückstände metallhaltiger Abfälle) in einem Vorprozess erzeugt wurde.

Vorteilhafterweise kann vorgesehen sein, dass zur Erzeugung der Leichtfraktion (Rohflusen) während der Aufbereitung von metallarmen, kunststoffreichen Abfällen zumindest folgende Verfahrensschritte nacheinander durchgeführt werden:
- Abtrennung von ferromagnetischen Bestandteilen
- Abtrennung einer ersten Rohsand-Fraktion
- Abtrennung von metallischen, nicht-ferromagnetischen Bestandteilen
- Abtrennung grober Bestandteile
- Zerkleinerung
- Abtrennung einer zweiten Rohsand-Fraktion
- Sortierung in wenigstens eine Leichtfraktion und eine Schwerfraktion

Die auf diese Weise hergestellte Leichtfraktion (Rohflusen) stellt einen idealen, gut weiter zu veredelnden Ausgangsstoff für das erfindungsgemäße Verfahren dar.

Vor der Prallbehandlung kann die Leichtfraktion vorteilhafterweise einer Fe-Abscheidung unterzogen werden.

Eine besonders vorteilhafte Weiterbildung der Erfindung sieht vor, dass die Leichtgutfraktion nach der Reinigung einer Agglomeration, insbesondere einer diskontinuierlichen, unterzogen wird, um die Leichtgutfraktion (gereinigte Flusen) in einen rieselfähigen Zustand zu überführen. Vor der Agglomeration ist die Leichtgutfraktion dann allerdings zweckmäßigerweise einem Puffer zuzuführen, um eine Abkopplung der Agglomerationsstufe vom Vorprozess und damit einen störungsfreien Prozessbetrieb zu gewährleisten. Die gewählte Agglomerationstemperatur sollte zweckmäßigerweise bei etwa 100°C bis 180°C, vorzugsweise bei etwa 140°C bis 170°C liegen. Das entstehende Agglomerat sollte zweckmäßigerweise gekühlt werden, um einerseits dessen Händelbarkeit zu erleichtern und andererseits eine Selbstzündung des Materials in einem Lagersilo oder einer Verpackungsvorrichtung zu verhindern. Eine erste Kühlung erfolgt mit Wasser bereits im Agglomerator selbst, wobei eine Abkühlung auf etwa 45°C-65°C, bevorzugt auf etwa 50°C-60°C, erfolgt. Danach kann sich noch eine weitere Kühlung/Trocknung des Agglomerats anschließen, bei der eine Kühlung, vorzugsweise mittels Luft (bspw. durch Luftfördergebläse) erfolgt. Hierbei wird bevorzugt ein Restfeuchtegehalt < 1,5 % angestrebt, wobei dieser durch eine entsprechende Einstellung der Verweilzeit in einer geeigneten pneumatischen Förderung erreicht werden kann.

Optional kann in höchst zweckmäßiger Weiterbildung des Erfindungsgedankens vorgesehen sein, nach der Agglomeration, vorzugsweise unmittelbar danach (wonach das Agglomerat noch warm und feucht ist) eine gasbasierte Extraktion von Schadstoffen aus dem Agglomerat durchzuführen ("Polizeifilterfunktion"). Als Gas können sehr vorteilhaft Stickstoff oder auch Luft eingesetzt werden.

Die zu extrahierenden Schadstoffe können beispielsweise leichtflüchtige KohlenwasserstoffVerbindungen und/oder leichtflüchtige anorganische Bestandteile (bspw. Quecksilber) sein, wobei durch den Verfahrensschritt der gasbasierten Extraktion die Erreichung vorgeschriebener Spezifikationen des Endproduktes noch weitergehend abgesichert werden kann. Damit allerdings die Temperatur während der gasbasierten Extraktion nicht zu weit absinkt und eine ausreichende Extraktion gewährleistet werden kann, sollte die gasbasierte Extraktion vor der Kühlung des Agglomerats erfolgen.

Optional kann vorteilhaft vorgesehen sein, dass nach der Agglomeration nochmals eine Siebung des Agglomerats durchgeführt wird, um dessen Korngröße individuell an etwaige Anforderungen von Abnehmern anzupassen, wobei die Korngrößenverteilung im Wesentlichen über die Verweilzeit der Leichtgutfraktion im Agglomerator und die gewählte Agglomerationstemperatur bis zur Kühlung bestimmt wird.

Es ist sehr von Vorteil, wenn die Leichtfraktion nach der Agglomeration einer Metallabscheidung unterzogen wird. Das während der Agglomeration (durch Imprägnation mit ferromagnetischen Partikeln) leicht magnetisierte, verkugelte Flusen-Material kann dabei höchst vorteilhaft einer Metallabscheidung mittels eines hochwirksamen Neodymmagneten unterzogen werden. Nicht magnetisches, bisher mitgeschlepptes Material (z.B. Kupferpartikel oder Kunststoffgranulat) wird abgetrennt und einem weiteren, gesonderten Prozess zugeführt. Übrig bleibt ein hochveredeltes Shredderflusen-Agglomerat.

Alternativ zur dargestellten Agglomeration ist aber auch eine Pelletierung oder Brikettierung der Leichtgutfraktion (gereinigte Flusen) denkbar. Auch in diesem Fall ist eine Pufferung der Leichtgutfraktion (gereinigte Flusen) durchaus sinnvoll und insbesondere im Hinblick auf die Sicherstellung einer hohen Materialverfügbarkeit zweckmäßig.

Zu erwähnen ist, dass gemäß einer weiteren vorteilhaften Ausgestaltung des Verfahrens die durch die Trennung erhaltene Leichtgutfraktion (Flusen) mit zumindest einer der durch die vorherige Klassierung erhaltenen Leichtfraktionsklassen zusammengeführt wird. Diese wird zweckmäßigerweise die zweite Leichtfraktionsklasse mit einem durchschnittlichen Teilegrößenbereich > 5-8mm sein, welche ebenfalls in Form von Flusen vorliegt und sich daher eine prozessoptimierende Zusammenführung dieser Materialströme anbietet.

Die erfindungsgemäße Anlage zur Aufbereitung einer Leichtfraktion, die während der Aufbereitung von metallarmen, kunststoffreichen Abfällen erzeugt wurde, weist Mittel auf, mit denen nacheinander folgende Verfahrensschritte durchführbar sind:
- Beanspruchung der Leichtfraktion mittels Prall und/oder Schlag
- Klassierung der Leichtfraktion in zumindest zwei Leichtfraktionsklassen
- Trennung zumindest einer Leichtfraktionsklasse in zumindest eine Staubfraktion und zumindest eine weitere Fraktion, wobei die Trennung der Staubfraktion über eine im wesentlichen kontrollierte Verweilzeit der Leichtfraktionsklasse in wenigstens einem an der Trennung beteiligten Verfahrensmittel erfolgt.

Durch die Trennung zumindest einer Leichtfraktionsklasse in zumindest eine Staubfraktion und zumindest eine weitere Fraktion, wobei die Trennung der Staubfraktion über eine im wesentlichen kontrollierte Verweilzeit der Leichtfraktionsklasse in wenigstens einem an der Trennung beteiligten Verfahrensmittel erfolgt, erhält man ein sehr reines Zwischenprodukt (Zwischenfraktion), was zu einer besseren Verarbeitbarkeit der Zwischenfraktion in darauf folgenden Verfahrensschritten führt. Insgesamt ist dadurch eine deutlich verbesserte stoffliche aber auch energetische Verwertung möglich.

Es ist von Vorteil, wenn in dem an der Trennung beteiligten Verfahrensmittel Mittel zur regelbaren Absaugung der Staubfraktion vorgesehen sind. Dies kann besonders kostengünstig und effektiv über wenigsten ein frequenzgesteuertes Gebläse realisiert werden.

Gemäß einer Weiterbildung der erfindungsgemäßen Anlage umfasst das an der Trennung beteiligte Mittel einen zick-zack-förmigen Absaugkanal. Der Absaugkanal kann beispielsweise Bestandteil einer Windsichtungseinrichtung sein, bei der das zu trennende Gut von oben in den Absaugkanal eingegeben wird. Der zick-zack-förmige Absaugkanal trägt (wie die regelbare Absaugung auch) dazu bei, dass die Verweilzeit der Partikel im Absaugkanal kontrolliert ist. Die Partikel fallen also nicht unkontrolliert den Absaugkanal hinunter, sondern deren Sinkgeschwindigkeit wird stark abgebremst, da die Partikel auf die schrägen Flächen (Prallflächen) des zickzackförmigen Absaugkanals aufprallen.

Zwar lässt sich durch die Erhöhung der Anzahl hintereinander angeordneter, zickzackförmiger Elemente die Verweilzeit des Guts im Absaugkanal (und somit die Trenngüte) erhöhen, doch nimmt damit auch der aufzubringende Absaugluftstrom und damit die erforderliche Leistung des Gebläses zu. Hier ist ein vorteilhafter Kompromiss zwischen Trenngüte und Energiebedarf sicherzustellen.

Denkbar ist auch, die Verweilzeit im Absaugkanal über andere konstruktive Maßnahmen zu kontrollieren bzw. zu erhöhen, eine zickzackförmige Ausgestaltung des Absaugkanals ist jedoch sehr einfach und kostengünstig zu realisieren.

Ferner sei darauf hingewiesen, dass durch geeignete Dosierförderer eine wohldosierte Einbringung der Leichtfraktion in den Absaugkanal erfolgen sollte, derart, dass eine Klumpen- oder Agglomeratbildung wirksam vermieden werden kann. Dies führt zu einer optimalen Vereinzelung der Partikel der Leichtfraktion und somit zu einer noch verbesserten Trenngüte.

Eine weitere zweckmäßige Weiterbildung der Erfindung sieht vor, dem an der Trennung beteiligten Verfahrensmittel zumindest einen Trenntisch nachzuschalten, der die nach der Trennung abgetrennte Restfraktion in zumindest eine Leichtgutfraktion und eine Schwergutfraktion trennt. Hierbei ist es sehr vorteilhaft, wenn der Trenntisch hinsichtlich seines auf das zu trennende Gut wirkenden Luftstroms und seiner Rüttelamplitude einstellbar ist. Ferner ist es sehr vorteilhaft, wenn der Trenntisch in seiner Neigung vorstellbar ist. Dadurch lässt sich die Verweilzeit des zu trennenden Guts auf dem Trenntisch variieren.

Gemäß einer anderen vorteilhaften Weiterbildung der Erfindung sind Mittel zur Beanspruchung der Leichtfraktion (Rohflusen) mittels Prall und/oder Schlag, vorzugsweise in Form zumindest einer Rotorprall- oder zumindest einer Hammermühle vorgesehen. Bei Verwendung einer Rotorprallmühle ist der Abstand zwischen Stator und Rotor zweckmäßigerweise zwischen 3 mm und 5 mm einzustellen. So kann eine sehr gute mechanische Beanspruchung der Leichtfraktion mit der gewünschten Verkugelung von in der Leichtfraktion noch enthaltenen Kupferlitzen bzw. Metalldrähten und anderen Störstoffen sichergestellt werden.

Wird zur mechanischen Beanspruchung der Leichtfraktion eine Hammermühle gewählt, dann ist durch Wahl einer geeigneten Sieblochung und geeigneter Schlagwerkzeuge sicherzustellen, dass die Verweilzeit in der Hammermühle ausreicht, um zu einer zufriedenstellenden Verkugelung der Kupferlitzen und Metalldrähte zu führen. Als besonders vorteilhaft haben sich hier eine Sieblochung mit einem Lochdurchmesser zwischen 8 mm und 15 mm sowie Schlagwerkzeuge mit einer Breite zwischen 6 mm und 14 mm herausgestellt.

Es ist von Vorteil, wenn den Mitteln zur Beanspruchung der Leichtfraktion mittels Prall und/oder Schlag Mittel zum Abtrennen ferromagnetischer Bestandteile, vorzugsweise wenigstens ein Magnetabscheider, insbesondere eine Magnettrommel oder eine Überbandmagneteinrichtung vorgeschaltet sind.

Ferner sieht eine äußerst zweckmäßige Ausgestaltung der erfindungsgemäßen Anlage vor, dass den Mitteln zur Beanspruchung der Leichtfraktion mittels Prall und/oder Schlag eine Klassiereinrichtung, insbesondere eine Siebeinrichtung mit einer Lochung von etwa 5-8 mm, nachgeschaltet ist.

Es ist ferner in zweckmäßiger Ausgestaltung der Erfindung vorgesehen, dass dem Trenntisch Mittel zur Oberflächenreinigung zumindest der Leichtgutfraktion nachgeschaltet sind, bevorzugt in Form einer mit ihrer Drehachse vertikal ausgerichteten Zentrifuge. Hierdurch wird eine wirksame Abreicherung der Leichtfraktion von schwermetallhaltigen Stäuben erzielt.

Eine Weiterbildung der erfindungsgemäßen Anlage sieht zudem vor, dass dem Mittel zur Oberflächenreinigung eine Agglomerationseinrichtung, insbesondere eine diskontinuierlich arbeitende, nachgeschaltet ist. Der Agglomerationseinrichtung ist dabei zweckmäßigerweise ein Puffer vorgeschaltet.

Der Agglomerationseinrichtung sind in Weiterbildung des Erfindungsgedankens Mittel zum Kühlen und Trocknen, vorzugsweise in Form eines Luftfördergebläses und/oder in Form einer Kühlwasser-Zuführeinrichtung, nachgeschaltet.

Schließlich ist vorteilhafterweise vorgesehen, der Agglomerationseinrichtung Mittel zur ferromagnetischen Metallabscheidung, vorzugsweise wenigstens ein Neodymmagnet, nachzuschalten.

Es ist zum Zwecke der Erhaltung einer hohen Qualität und einer weitergehenden Absicherung der Erreichung vorgeschriebener Spezifikationen sehr vorteilhaft, wenn Mittel vorgesehen sind, durch die das Agglomerat nach der Agglomeration einer gasbasierten Extraktion von Schadstoffen unterzogen werden kann.

Nachfolgend wird die Erfindung anhand eines bevorzugten Ausführungsbeipiels näher beschrieben. Dabei zeigen die
- Fig.1: ein schematisches Fließdiagramm der nacheinander folgenden Prozessschritte zum Erhalt einer kunststoffreichen Leichtfraktion LF (Rohflusen) und einer kunststoffreichen Schwerfraktion SF (Rohgranulat),
- Fig. 2: ein schematisches Fließdiagramm eines ersten Teils der nacheinander folgenden Prozessschritte zur Aufbereitung der Leichtfraktion LF (Rohflusen)
- Fig.3: ein schematisches Fließdiagramm eines zweiten Teils der nacheinander folgenden Prozessschritte zur Aufbereitung der Leichtfraktion LF (Rohflusen)

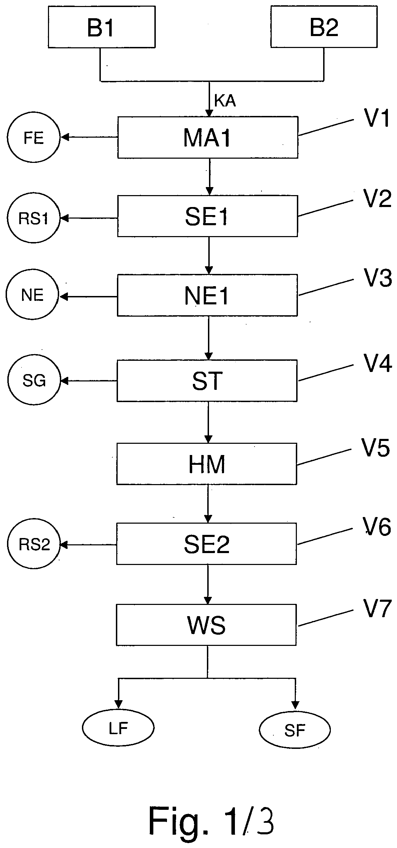

Das in Fig.1 gezeigte schematische Fließdiagramm zeigt den Prozessablauf bei der Aufbereitung von metallarmen, kunststoffreichen Abfällen KA zum Erhalt einer kunststoffreichen Schwerfraktion SF und einer kunststoffreichen Leichtfraktion LF, die beispielsweise einem Shredderprozess von Altfahrzeugen nachgeschaltet sein können.

Neben den metallarmen, kunststoffreichen Abfällen aus einem Shredderprozess können auch andere Kunststoffabfälle mit Hilfe der Erfindung aufbereitet werden. Bei der Verwertung von Altfahrzeugen werden zunächst in einem an sich bekannten vorgeschalteten Shredderprozess in einem Shredder metallhaltige Abfälle durch einen Zerkleinerungsprozess aufgeschlossen. Im Nachgang erfolgt eine Abtrennung einer flugfähigen Shredder-Leichtfraktion SLF durch eine Absaugeinrichtung. Der nach der Absaugung verbleibende schwere, nichtflugfähige Stoffstrom wird auf einem Magnetabscheider in eine ferromagnetische und eine nichtferromagnetische Fraktion getrennt. Die ferromagnetische Fraktion wird als Shredderschrott bezeichnet und stellt das primäre, direkt in der Metallurgie einsetzbare Produkt des Shredders dar. Die verbleibende schwere, nichtferromagnetische Fraktion wird als Shredder-Schwerfraktion SSF bezeichnet.

Die Shredder-Leichtfraktion SLF wird allein oder zusammen mit der Shredder-Schwerfraktion SSF und gegebenenfalls mit weiteren metallarmen, kunststoffreichen Abfällen gemäß der Erfindung weiter aufbereitet und werden wenn sie dem erfindungsgemäßen Prozess unterworfen werden als metallarme, kunststoffreiche Abfälle KA bezeichnet. Diese Kunststoffabfälle weisen einen Metallanteil von < 20%, vorzugsweise einen Metallanteil im Größenbereich von 5 % auf. Für die Einspeisung der metallarmen, kunststoffreichen Abfälle sind ein oder mehrere Aufgabebehälter B1 und/oder B2 vorgesehen, um den erfindungsgemäßen Aufbereitungsprozess von vorgelagerten Prozessen, beispielsweise den Shredder-Prozess abzukoppeln.

In einem ersten Verfahrenschritt V1 werden die ferromagnetischen Bestandteile FE mittels eines Magnetabscheiders MA1 als ferromagnetische Fraktion abgetrennt, die damit einem metallurgischen Aufarbeitungsprozess zur rohstofflichen Wiederverwertung zugeführt werden können. Darauf folgt eine Abtrennung V2 einer ersten Rohsandfraktion RS1 mittels einer Siebeinrichtung SE1, die im Ausführungsbeispiel eine Lochgröße im Bereich von 10 -12 mm aufweist. Durch die Abtrennung dieser Rohsandfraktion werden die nachfolgenden Prozessschritte bezüglich der abgetrennten Rohsandfraktion entlastet. An den Verfahrensschritt V2 schließt sich ein Prozessschritt V3 zur Abscheidung von nichtferromagnetischen Metallbestandteilen NE (nichtferromagnetische Metallfraktion), wie Kupfer, Messing und Aluminium an. Vorzugsweise können hier Mittel NE1 zur Wirbelstromabscheidung oder zur sensitiven Metallabtrennung mittels Farb- oder Fehlfarbendetektion zum Einsatz kommen. Bewährt hat sich hier der Einsatz der Anlage VARISORT der Firma S & S GmbH. Der nachfolgende Prozessschritt V4 der Abtrennung grober Bestandteile reduziert maßgeblich den Verschleiß im nächsten Prozessschritt V5 der Hauptzerkleinerung. Zum Einsatz können im Prozessschritt V4 zur Abtrennung der groben Bestandteile SG Mittel ST zur Luftstromtrennung, sogenannte Air Knife-Systeme, kommen. Nach der Abtrennung des Schwergutes erfolgt im Prozessschritt V5 eine Zerkleinerung der verbleibenden Fraktionen mittels einer Hammermühle HM. Die Zerkleinerung erfolgt dabei derart, dass das Volumen der in den verbleibenden Fraktionen enthaltenen Leichtfraktion LF (Rohflusen) vergrößert wird, wodurch in einem späteren Prozessschritt V7 eine verbesserte und fraktionssaubere Auftrennung der verbleibenden Fraktionen in eine Leichtfraktion LF (Rohflusen) und eine Schwerfraktion SF (Rohgranulat) möglich ist. Zur Auftrennung der verbleibenden Fraktion sind nach dem Ausführungsbeispiel Mittel (WS) zur Windsichtung vorgesehen. Die entstehende Schwerfraktion SF (Rohgranulat) weist ein mittleres Schüttgutgewicht von 0,3 t/m³ auf. Zwischen dem Prozessschritt V5 der Zerkleinerung, vorzugsweise bei 20 mm, und dem Prozessschritt V7 der Auftrennung der verbleibenden Fraktionen ist ein Prozessschritt V6 vorgesehen, in dem eine zweite Rohsandfraktion RS2 mittels einer Siebeinrichtung SE2 abgetrennt wird. Die Lochgröße der Siebeinrichtung SE2 liegt vorzugsweise im Bereich von 4 - 6 mm.

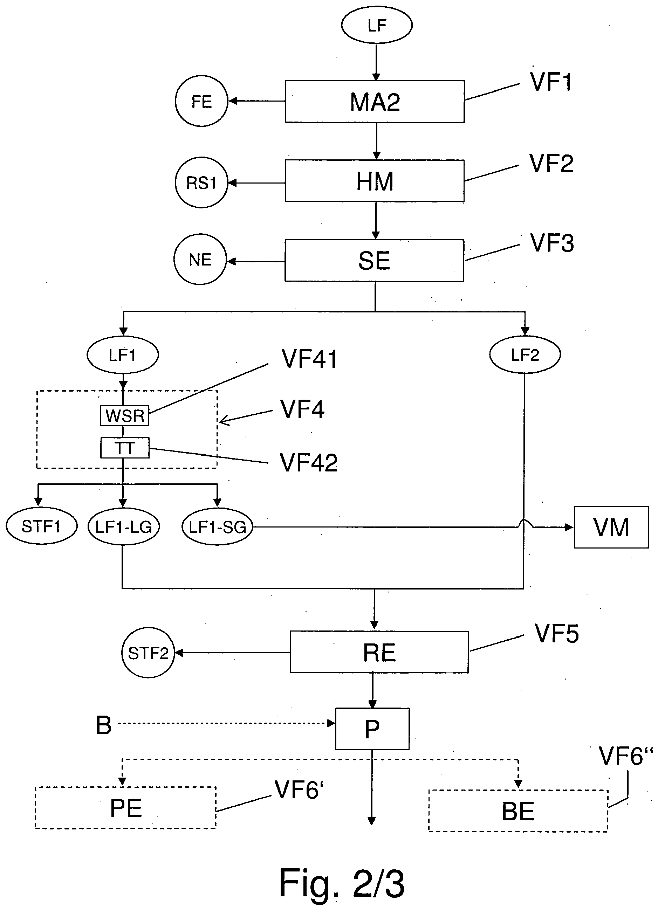

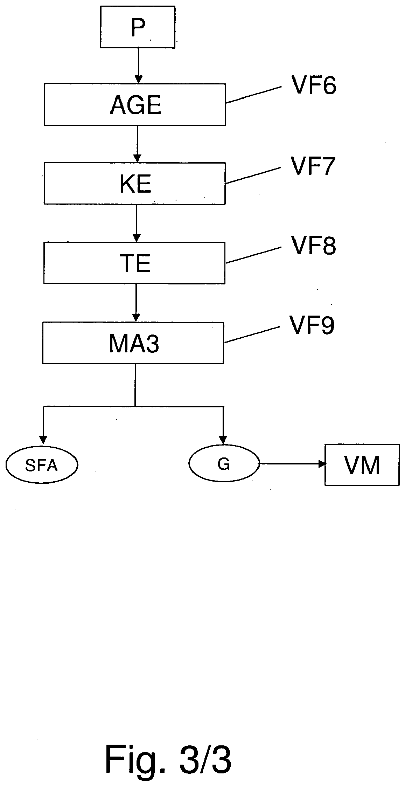

Die so erzeugte Leichtfraktion LF (Rohflusen) wird durch das in den Fig. 2 und 3 gezeigte Verfahren veredelt, wobei in der Fig.2 der erste Teil des Verfahrens (Verfahrensschritte VF1 bis VF5 bzw. optionale Verfahrensschritte VF6', VF6") und in der Fig. 3 der zweite Teil des Verfahrens (Verfahrensschritte VF6 bis VF9) dargestellt ist. Während der Veredelung wird die Leichtfraktion LF in einem ersten Prozessschritt VF1 der Abscheidung der ferromagnetischen Bestandteile FE, die während der Zerkleinerung im Prozessschritt V5 aufgeschlossen wurden, unterzogen. Vorzugsweise kommt dafür ein Magnetabscheider MA2, beispielsweise eine Magnettrommel oder eine Überbandmagneteinrichtung zum Einsatz.

Im einem nächsten Verfahrensschritt VF2 wird das Material einer mechanischen Beanspruchung, insbesondere einer Prallbehandlung, vorzugsweise in einer Rotorprall- oder in einer Hammermühle HM unterzogen, wobei im Material vorhandene Metall- bzw. Kupferdrähte und -litzen verkugelt werden.

Anschließend wird in einem nachgeschalteten Verfahrensschritt VF3 das Material einer Klassierung, vorzugsweise mittels einer Siebeinrichtung SE mit einem Lochdurchmesser von 5-8 mm, unterzogen. Hierdurch entstehen zwei Leichtfraktionsklassen LF1 und LF2, wobei die erste Leichtfraktionsklasse LF1 den Siebunterlauf (kleinere Bestandteile des Siebungsmaterials) mit einem durchschnittlichen Teilegrößenbereich < 5-8mm und die zweite Leichtfraktionsklasse LF2 den Siebüberlauf mit einem durchschnittlichen Teilegrößenbereich > 5-8mm darstellt. Die zweite Leichtfraktionsklasse LF2 weist überwiegend flusenartige Konsistenz auf.

In einem nachfolgenden Verfahrensschritt VF4 wird die erste Leichtfraktionsklasse LF1 einer Dichtetrennung unterzogen, wobei sich der Verfahrensschritt VF4 in die Verfahrensschritte VF41 und VF42 unterteilt. Im Verfahrensschritt VF41 wird die Leichtgutfraktion LF1 einer Windsichtungseinrichtung WSR mit einem zickzackförmigen, in etwa vertikal ausgerichteten Absaugkanal zugeführt. Der Absaugluftstrom im Absaugkanal ist mittels eines frequenzgesteuerten Gebläses regelbar und wird in Abhängigkeit der Dichte bzw. spezifischen Dichte der eingebrachten Leichtfraktion LF1 geregelt. Durch den regelbaren Absaugluftstrom einerseits und den zickzackförmigen Absaugkanal andererseits ist eine kontrollierte Verweilzeit der Leichtfraktion im Absaugkanal und damit eine sehr hohe Trenngüte erreichbar.

Im nachgeschalteten Verfahrensschritt VF42 wird die vom Staub im Wesentlichen befreite Leichtfraktion einem Trenntisch TT zugeführt. Dieser ist hinsichtlich seines auf die zu trennende Leichtfraktion wirkenden Luftstroms, seiner Rüttelamplitude und seiner Neigung einstellbar. Die Leichtfraktionsklasse LF1 wird durch den Trenntisch TT in eine Leichtgut-Fraktion LF1-LG sowie eine Schwergut-Fraktion LF1-SG aufgetrennt.

Die Schwergut-Fraktion LF1-SG weist eine granulatförmige Konsistenz mit einem mittleren Schüttgewicht von etwa 400-500 kg/m3 auf und beinhaltet Kupfer in Form von Litzen oder Drähten. Die Schwergut-Fraktion LF1-SG wird einem weiteren Verarbeitungsmodul VM zugeführt, welches nicht Gegenstand der vorliegenden Erfindung ist.

Die Leichtgut-Fraktion LF1-LG wird in einem darauffolgenden Verfahrensschritt VF5 einer Reinigung durch eine spezielle Reinigungseinrichtung RE unterzogen. Die Reinigungseinrichtung RE umfasst dabei wenigstens eine Zentrifuge, in der eine trockene Oberflächenreinigung der Leichtgut-Fraktion LF1-LG erfolgt. Konkret wird mittels der Zentrifuge die Leichtgut-Fraktion LF1-LG entstaubt, also von schwermetallbehaftetem Staub STF2 (i.w. Blei- und Zinkhaltig) befreit.

Anschließend kann die so gereinigte Leichtgut-Fraktion LF1-LG einer Pelletierung VF6' in einer Pelletiereinrichtung PE oder einer Brikettierung VF6" in einer Brikettiereinrichtung BE zugeführt werden, vorzugsweise wird sie (LF1-LG) jedoch einer Agglomeration VF6 zugeführt. Die Agglomeration VF6 der Leichtgut-Fraktion LF1-LG erfolgt in einer geeigneten Agglomerationseinrichtung AGE bei etwa 100°C bis 180°C, vorzugsweise bei etwa 140°C bis 170°C nach einem diskontinuierlichen Verfahren, solange, bis eine rieselfähige Konsistenz des aufzubereitenden Materials (LF1-LG) erreicht ist. Aufgrund der diskontinuierlichen Agglomeration ist die Anordnung eines Materialpuffers P vor der Agglomeration VF6 notwendig. Jedoch bietet das den Vorteil der Abkopplung des Verfahrensschrittes VF6 von den vorgeschalteten Verfahrensschritten und die Möglichkeit, eine zusätzliche Beschickung B des Materialpuffers P mit anderen, vorzugsweise auch prallbehandelten Materialien vorzunehmen. Aber auch vor der Pelletierung VF6' oder Brikettierung VF6" ist die Vorschaltung des Materialpuffers P sinnvoll und zweckmäßig.

Das durch die Agglomeration VF6 entstehende Agglomerat wird bereits im Agglomerator mittels Kühlwasser auf etwa 50-60°C abgekühlt. Optional können geeignete (nicht näher dargestellte) Mittel vorgesehen sein, um das Agglomerat nach der Agglomeration einer gasbasierten Extraktion von Schadstoffen zu unterziehen. Das Agglomerat kann anschließend mittels einer Kühleinrichtung KE aber noch weiter bis auf Umgebungstemperatur abgekühlt (VF7) werden. Die Kühleinrichtung KE kann hierbei mit Wasser arbeiten. Denkbar ist jedoch auch eine Abkühlung mittels Luft, beispielsweise Luft eines Luftfördergebläses. Insbesondere bei einer erfolgten Kühlung mittels Wasser ist eine Trocknung VF8 mittels einer geeigneten Trocknungseinrichtung TE zu empfehlen. Die Trocknung VF8 kann beispielsweise durch Luft, auch mit erhitzter Luft erfolgen. Die Verfahrensschritte VF7 und VF8 können auch parallel betrieben werden.

Schließlich wird das Agglomerat einer Metallabscheidung VF9 zugeführt, wobei als Metallabscheideeinrichtung MA3 vorzugsweise ein Neodymmagnet eingesetzt wird, der bei kleinen Abmessungen sehr hohe Trennleistung erzielt. Durch die Metallabscheideeinrichtung MA3 werden die magnetischen (während des Agglomerationsprozesses wurde das flusenartige Material (LF1-LG) durch Imprägnation mit ferromagnetischen Partikeln leicht magnetisch) von den nichtmagnetischen, vorwiegend kupferhaltigen Materialien abgetrennt. Als Endprodukte entstehen somit ein hochreines Shredderflusen-Agglomerat (SFA) und ein Kupfer/Kunststoffgranulat G. Das Kupfer/Kunststoffgranulat G wird (wie das Schwergut LF1-SG) ebenfalls dem weiteren Verarbeitungsmodul VM zugeführt, welches wie bereits erwähnt nicht Gegenstand der vorliegenden Erfindung ist.

### Bezugszeichenliste

- AGE: Agglomerationseinrichtung
- B: Beschickung des Materialpuffers P
- B1, B2: Aufgabebehälter
- BE: Brikettiereinrichtung
- FE: ferromagnetische Bestandteile
- G: Kupfer/Kunststoff-Granulat
- HM: Hammermühle
- KA: metallarme, kunststoffreiche Abfälle
- KE: Kühleinrichtung
- KU: Kunststoff
- LF: Leichtfraktion, die während der Aufbereitung von metallarmen, kunststoffreichen Abfällen erzeugt wurde
- LF1: 1. Leichtfraktionsklasse mit durchschnittlicher Teilegröße < 5-8mm
- LF1-LG: Leichtgut, welches durch Dichtetrennung der 1. Leichtfraktionsklasse LF1 erzeugt wurde
- LF1-SG: Schwergut, welches durch Dichtetrennung der 1. Leichtfraktionsklasse LF1 erzeugt wurde
- LF2: 2. Leichtfraktionsklasse mit durchschnittlicher Teilegröße > 5-8mm
- MA1: Metall-Abscheideeinrichtung
- MA2: Metall-Abscheideeinrichtung
- MA3: Metall-Abscheideeinrichtung
- NE: nicht-ferromagnetische Metallbestandteile
- NE1: Mittel zur Abscheidung nicht-ferromagnetischer Metallbestandteile
- P: Materialpuffer
- PE: Pelletiereinrichtung
- RE: Reinigungseinrichtung (Zentrifuge)
- RS1: erste Rohsandfraktion
- RS2: zweite Rohsandfraktion
- SE: Siebeinrichtung
- SE1: erste Siebeinrichtung
- SE2: zweite Siebeinrichtung
- SF: Schwerfraktion, die während der Aufbereitung von metallarmen, kunststoffreichen Abfällen erzeugt wurde
- SFA: Shredderflusen-Agglomerat
- SG: Schwergut
- ST: Mittel zur Schwergutabtrennung
- STF1: Staubfraktion, durch Verfahrensschritt VF4 freigesetzt
- STF2: Staubfraktion, durch Verfahrensschritt VF5 freigesetzt
- TE: Trocknungseinrichtung
- TT: Trenntisch
- VM: Verarbeitungsmodul, welches weitere Verarbeitungsschritte umfasst
- V1-V7: Verfahrensschritte zur Aufbereitung von metallarmen, kunststoffreichen Abfällen
- VF1-VF9: Verfahrensschritte zur Aufbereitung der Leichtfraktion LF (Rohflusen), die während der Aufbereitung von metallarmen, kunststoffreichen Abfällen KA erzeugt wurde
- VF41: Verfahrensschritt zur Abtrennung von Staub
- VF42: Verfahrensschritt zur Auftrennung von Leichtgut- und Schwergutfraktion
- WS: Mittel zum Auftrennen in eine Leicht- und eine Schwerfraktion
- WSR: Windsichtungseinrichtung zum Trennen der Staubfraktion

## Patentansprüche

1. Verfahren zur Aufbereitung einer Leichtfraktion (LF), die während der Aufbereitung von metallarmen, kunststoffreichen Abfällen (KA) erzeugt wurde, mit folgenden Verfahrensschritten:
- Beanspruchung (VF2) der Leichtfraktion (LF) mittels Prall und/oder Schlag,
- Klassierung (VF3) der Leichtfraktion (LF) in zumindest zwei Leichtfraktionsklassen (LF1 und LF2),
- Trennung (**VF4**) zumindest einer Leichtfraktionsklasse (LF1) in zumindest eine Staubfraktion (STF1) und zumindest eine weitere Fraktion (LF1-LG, LF1-SG), wobei **eine** Trennung (**VF41**) der Staubfraktion (STF1) über eine im wesentlichen kontrollierte Verweilzeit der Leichtfraktionsklasse (LF1) in wenigstens einem an der Trennung (VF41) beteiligten Verfahrensmittel (WSR) erfolgt.

2. Verfahren nach Anspruch 1, **dadurch gekennzeichnet, dass** die Verweilzeit der Leichtfraktionsklasse (LF1) in dem Verfahrensmittel (WSR) über eine regelbare Absaugung kontrolliert ist.

3. Verfahren nach Anspruch 2, **dadurch gekennzeichnet, dass** die Absaugung einen Absaugluftstrom aufweist, der in Abhängigkeit der Dichte der zumindest einen Leichtfraktionsklasse (LF1) geregelt wird.

4. Verfahren nach Anspruch 3, **dadurch gekennzeichnet, dass** die Geschwindigkeit des Absaugluftstroms proportional zur Dichte der zumindest einen Leichtfraktionsklasse (LF1) geregelt wird.

5. Verfahren nach wenigstens einem der Ansprüche 1 bis 4, **dadurch gekennzeichnet, dass** die Leichtfraktionsklasse (LF1) neben der Staubfraktion (STF1) in zumindest eine Leichtgutfraktion (LF1-LG) und eine Schwergutfraktion (LF1-SG) getrennt (VF42) wird.

6. Verfahren nach Anspruch 5, **dadurch gekennzeichnet, dass** zumindest die Leichtgutfraktion (LF1-LG) gereinigt (VF5) wird.

7. Verfahren nach Anspruch 6, **dadurch gekennzeichnet, dass** die Reinigung (VF5) durch Entstaubung erfolgt.

8. Verfahren nach wenigstens einem der vorhergehenden Ansprüche, **dadurch gekennzeichnet, dass** die Klassierung (VF3) der Leichtfraktion (LF) durch Siebung bei einem Lochdurchmesser von etwa 5-8 mm erfolgt.

9. Verfahren nach wenigstens einem der vorhergehenden Ansprüche, **dadurch gekennzeichnet, dass** durch die Klassierung (VF3) der Leichtfraktion (LF) zumindest eine erste Leichtfraktionsklasse (LF1) mit einem durchschnittlichen Teilegrößenbereich < 5-8mm und eine zweite Leichtfraktionsklasse (LF2) mit einem durchschnittlichen Teilegrößenbereich > 5-8mm erzeugt wird.

10. Verfahren nach wenigstens einem der vorhergehenden Ansprüche, **dadurch gekennzeichnet, dass** die durch die Trennung (VF4) gewonnene Leichtgutfraktion (LF1-LG) im Mittel ein Schüttgutgewicht von < 250 kg/m3 und die gewonnene Schwergutfraktion (LF1-SG) im Mittel ein Schüttgutgewicht von > 250 kg/m3 aufweist.

11. Verfahren nach wenigstens einem der vorhergehenden Ansprüche, **dadurch gekennzeichnet, dass** die Leichtfraktion (LF) eine faserreiche Leichtfraktion ist.

12. Verfahren nach Anspruch 1 oder 2, **dadurch gekennzeichnet, dass** die metallarmen, kunststoffreichen Abfälle zumindest zum Teil Shredder-Rückstände metallhaltiger Abfälle sind.

13. Verfahren nach wenigstens einem der vorhergehenden Ansprüche, **dadurch gekennzeichnet, dass** zur Erzeugung der Leichtfraktion (LF) während der Aufbereitung von metallarmen, kunststoffreichen Abfällen (KA) zumindest folgende Verfahrensschritte (V1 bis V7) nacheinander durchgeführt werden:
- Abtrennung (V1) von ferromagnetischen Bestandteilen (FE)
- Abtrennung (V2) einer ersten Rohsand-Fraktion (RS1)
- Abtrennung (V3) von metallischen, nicht-ferromagnetischen Bestandteilen (NE)
- Abtrennung (V4) grober Bestandteile (SG)
- Zerkleinerung (V5)
- Abtrennung (V6) einer zweiten Rohsand-Fraktion (RS2)
- Sortierung (V7) in wenigstens eine Leichtfraktion (LF) und eine Schwerfraktion (SF)

14. Verfahren nach wenigstens einem der vorhergehenden Ansprüche, **dadurch gekennzeichnet, dass** vor der Prallbehandlung (VF2) eine FE-Abscheidung (VF1) erfolgt.

15. Verfahren nach wenigstens einem der Ansprüche 6 bis 14, **dadurch gekennzeichnet, dass** die Leichtgutfraktion (LF1-LG) nach der Reinigung (VF5) einer Agglomeration (VF6) unterzogen wird.

16. Verfahren nach Anspruch 15, **dadurch gekennzeichnet, dass** die Agglomeration (VF6) bei etwa 100°C bis 180°C erfolgt.

17. Verfahren nach wenigstens einem der vorhergehenden Ansprüche 15 und 16, **dadurch gekennzeichnet, dass** die Leichtgutfraktion (LF1-LG) nach der Agglomeration (VF6) zusätzlich gekühlt (VF7) wird.

18. Verfahren nach Anspruch 17, **dadurch gekennzeichnet, dass** die Kühlung (VF7) in etwa auf Umgebungstemperatur erfolgt.

19. Verfahren nach wenigstens einem der vorhergehenden Ansprüche 15 bis 18, **dadurch gekennzeichnet, dass** die Leichtgutfraktion (LF1-LG) nach der Agglomeration (VF6) zusätzlich getrocknet (VF8) wird.

20. Verfahren nach wenigstens einem der vorhergehenden Ansprüche 15 bis 19, **dadurch gekennzeichnet, dass** die Leichtgutfraktion (LF1-LG) nach der Agglomeration (VF6) einer Metallabscheidung (VF9) unterzogen wird.

21. Verfahren nach wenigstens einem der vorhergehenden Ansprüche 15 bis 20, **dadurch gekennzeichnet, dass** die Leichtgutfraktion (LF1-LG) vor der Agglomeration (VF6) einem Puffer (P) zugeführt wird.

22. Verfahren nach wenigstens einem der vorhergehenden Ansprüche 6 bis 21, **dadurch gekennzeichnet, dass** die Leichtgutfraktion (LF1-LG) nach der Reinigung (VF5) einer Pelletierung (VF6') unterzogen wird.

23. Verfahren nach wenigstens einem der vorhergehenden Ansprüche 6 bis 22, **dadurch gekennzeichnet, dass** die Leichtgutfraktion (LF1-LG) nach der Reinigung (VF5) einer Brikettierung (VF6") unterzogen wird.

24. Verfahren nach wenigstens einem der vorhergehenden Ansprüche, **dadurch gekennzeichnet, dass** die durch die Trennung (VF4) erhaltene Leichtgutfraktion (LF1-LG) mit zumindest einer der durch die vorherige Sortierung (VF3) erhaltenen Leichtfraktionsklassen (LF2) zusammengeführt wird.

25. Verfahren nach wenigstens einem der vorhergehenden Ansprüche 15 bis 24, **dadurch gekennzeichnet, dass** das Agglomerat nach der Agglomeration (VF6) einer gasbasierten Extraktion von Schadstoffen unterzogen wird.

26. Anlage zur Aufbereitung einer Leichtfraktion (LF), die während der Aufbereitung von metallarmen, kunststoffreichen Abfällen (KA) erzeugt wurde, **dadurch gekennzeichnet, dass** Mittel (MA2, HM, SE, WSR, TT, RE, AGE, KE, TE, MA3) vorgesehen sind, mit denen nacheinander folgende Verfahrensschritte durchführbar sind:
- Beanspruchung (VF2) der Leichtfraktion (LF) mittels Prall und/oder Schlag
- Klassierung (VF3) der Leichtfraktion (LF) in zumindest zwei Leichtfraktionsklassen (LF1 und LF2)
- Trennung (**VF4**) zumindest einer Leichtfraktionsklasse (LF1) in zumindest eine Staubfraktion (STF1) und zumindest eine weitere Fraktion (LF1-LG, LF1-SG), wobei **eine** Trennung (**VF41**) der Staubfraktion (STF1) über eine im wesentlichen kontrollierte Verweilzeit der Leichtfraktionsklasse (LF1) in wenigstens einem an der Trennung (VF41) beteiligten Verfahrensmittel (WSR) erfolgt.

27. Anlage nach Anspruch 26, **dadurch gekennzeichnet, dass** in dem an der Trennung (VF41) beteiligten Verfahrensmittel (WSR) Mittel zur regelbaren Absaugung der Staubfraktion (STF1) vorgesehen sind.

28. Anlage nach Anspruch 26 oder 27, **dadurch gekennzeichnet, dass** das an der Trennung (VF41) beteiligte Mittel (WSR) einen zickzackförmigen Absaugkanal umfasst.

29. Anlage nach wenigstens einem der vorhergehenden Ansprüche 27 bis 28, **dadurch gekennzeichnet, dass** die Mittel zur regelbaren Staubabsaugung zumindest ein frequenzgesteuertes Gebläse umfassen.

30. Anlage nach wenigstens einem der vorhergehenden Ansprüche 26 bis 29, **dadurch gekennzeichnet, dass** dem an der Trennung (VF41) beteiligten Verfahrensmittel (WSR) zumindest ein Trenntisch (TT) nachgeschaltet ist, der die nach der Trennung (VF41) abgetrennte Restfraktion in zumindest eine Leichtgutfraktion (LF1-LG) und eine Schwergutfraktion (LF1-SG) trennt (VF42).

31. Anlage nach Anspruch 30, **dadurch gekennzeichnet, dass** der Trenntisch (TT) hinsichtlich seines auf das zu trennende Gut wirkenden Luftstroms und/oder seiner Rüttelamplitude und/oder seiner Neigung einstellbar ist.

32. Anlage nach wenigstens einem der vorhergehenden Ansprüche 26 bis 31, **dadurch gekennzeichnet, dass** die Mittel (HM) zur Beanspruchung (VF2) der Leichtfraktion (LF) mittels Prall und/oder Schlag in Form zumindest einer Rotorprall- oder zumindest einer Hammermühle vorgesehen sind.

33. Anlage nach Anspruch 32, **dadurch gekennzeichnet, dass** bei Einsatz einer Rotorprallmühle der Abstand zwischen Stator und Rotor zwischen 3 mm und 5 mm beträgt.

34. Anlage nach Anspruch 32, **dadurch gekennzeichnet, dass** bei Einsatz einer Hammermühle deren Sieblochung einen Lochdurchmesser zwischen 8 und 15 mm aufweist und deren Schlagwerkzeuge zwischen 6 mm und 14 mm breit sind.

35. Anlage nach wenigstens einem der vorhergehenden Ansprüche 26 bis 34, **dadurch gekennzeichnet, dass** den Mitteln (HM) zur Beanspruchung (VF2) der Leichtfraktion (LF) mittels Prall und/oder Schlag Mittel (MA2) zum Abtrennen ferromagnetischer Bestandteile (FE) vorgeschaltet sind.

36. Anlage nach wenigstens einem der vorhergehenden Ansprüche 26 bis 35, **dadurch gekennzeichnet, dass** den Mitteln (HM) zur Beanspruchung (VF2) der Leichtfraktion (LF) mittels Prall und/oder Schlag eine Klassiereinrichtung in Form einer Siebeinrichtung (SE) mit einer Lochung von etwa 5-8 mm nachgeschaltet ist.

37. Anlage nach wenigstens einem der vorhergehenden Ansprüche 30 bis 36, **dadurch gekennzeichnet, dass** dem Trenntisch (TT) Mittel (RE) zur Oberflächenreinigung zumindest der Leichtgutfraktion (LF1-LG) nachgeschaltet sind.

38. Anlage nach Anspruch 37, **dadurch gekennzeichnet, dass** dem Mittel (RE) zur Oberflächenreinigung eine Agglomerationseinrichtung (AGE) nachgeschaltet ist.

39. Anlage nach Anspruch 38, **dadurch gekennzeichnet, dass** der Agglomerationseinrichtung (AGE) ein Puffer (P) vorgeschaltet ist.

40. Anlage nach wenigstens einem der vorhergehenden Ansprüche 38 bis 39, **dadurch gekennzeichnet, dass** der Agglomerationseinrichtung (AGE) Mittel zum Kühlen und Trocknen (KE, TE) nachgeschaltet sind.

41. Anlage nach wenigstens einem der vorhergehenden Ansprüche 38 bis 40, **dadurch gekennzeichnet, dass** der Agglomerationseinrichtung (AGE) Mittel (MA3) zur ferromagnetischen Metallabscheidung nachgeschaltet sind.

42. Anlage nach wenigstens einem der vorhergehenden Ansprüche 38 bis 41, **dadurch gekennzeichnet, dass** Mittel vorgesehen sind, durch die das Agglomerat nach der Agglomeration einer gasbasierten Extraktion von Schadstoffen unterzogen werden kann.

## Claims

1. Process for treating a light fraction (LF) produced during the treatment of scrap (KA) that has a low metal content and a high plastic content, comprising the following process steps:
- applying stress (VF2) to the light fraction (LF) by means of impact and/or shock,
- classifying (VF3) the light fraction into at least two light fraction classes (LF1 and LF2),
- separating (VF4) at least one light fraction class (LF1) into at least one dust fraction (STF1) and at least one further fraction (LF1-LG, LF1-SG), a separation (VF41) of the dust fraction (STF1) taking place over a substantially controlled retention time of the light fraction class (LF1) in at least one process means (WSR) taking part in the separation (VF41).

2. Process according to Claim 1, **characterized in that** the retention time of the light fraction class (LF1) in the process means (WSR) is controlled by way of a controllable suction extraction.

3. Process according to Claim 2, **characterized in that** the suction extraction has a suction-extraction air stream, which is controlled in dependence on the density of the at least one light fraction class (LF1).

4. Process according to Claim 3, **characterized in that** the velocity of the suction-extraction air stream is controlled in proportion to the density of the at least one light fraction class (LF1).

5. Process according to at least one of Claims 1 to 4, **characterized in that**, apart from the dust fraction (STF1), the light fraction class (LF1) is separated (VF42) into at least one light material fraction (LF1-LG) and one heavy material fraction (LF1-SG).

6. Process according to Claim 5, **characterized in that** at least the light material fraction (LF1-LG) is cleaned (VF5).

7. Process according to Claim 6, **characterized in that** the cleaning (VF5) is performed by dedusting.

8. Process according to at least one of the preceding claims, **characterized in that** the classifying (VF3) of the light fraction (LF) is performed by screening with a hole diameter of approximately 5-8 mm.

9. Process according to at least one of the preceding claims, **characterized in that** the classifying (VF3) of the light fraction (LF) produces at least a first light fraction class (LF1) with an average particle size range of < 5-8 mm and a second light fraction class (LF2) with an average particle size range of > 5-8 mm.

10. Process according to at least one of the preceding claims, **characterized in that** the light material fraction (LF1-LG) obtained by the separation (VF4) has on average a bulk material weight of < 250 kg/m3 and the heavy material fraction (LF1-SG) obtained has on average a bulk material weight of > 250 kg/m3.

11. Process according to at least one of the preceding claims, **characterized in that** the light fraction (LF) is a light fraction with a high fibre content.

12. Process according to Claim 1 or 2, **characterized in that** the scrap that has a low metal content and a high plastic content is at least partly shredder remains of scrap that contains metal.

13. Process according to at least one of the preceding claims, **characterized in that**, to produce the light fraction (LF) during the treatment of scrap (KA) that has a low metal content and a high plastic content, at least the following process steps (V1 to V7) are carried out one after the other:
- segregation (V1) of ferromagnetic constituents (FE)
- segregation (V2) of a first raw sand fraction (RS1)
- segregation (V3) of metallic, non-ferromagnetic constituents (NE)
- segregation (V4) of coarse constituents (SG)
- comminution (V5)
- segregation (V6) of a second raw sand fraction (RS2)
- sorting (V7) into at least one light fraction (LF) and one heavy fraction (SF).

14. Process according to at least one of the preceding claims, **characterized in that**, before the impact treatment (VF2), an FE separation (VF1) is performed.

15. Process according to at least one of Claims 6 to 14, **characterized in that**, after cleaning (VF5), the light material fraction (LF1-LG) is subjected to an agglomeration (VF6).

16. Process according to Claim 15, **characterized in that** the agglomeration (VF6) is performed at approximately 100°C to 180°C.

17. Process according to at least one of the preceding Claims 15 and 16, **characterized in that**, after the agglomeration (VF6), the light material fraction (LF1-LG) is additionally cooled (VF7).

18. Process according to Claim 17, **characterized in that** the cooling (VF7) is performed at approximately ambient temperature.

19. Process according to at least one of the preceding Claims 15 to 18, **characterized in that**, after the agglomeration (VF6), the light material fraction (LF1-LG) is additionally dried (VF8).

20. Process according to at least one of the preceding Claims 15 to 19, **characterized in that**, after the agglomeration (VF6), the light material fraction (LF1-LG) is subjected to a metal separation (V9).

21. Process according to at least one of the preceding Claims 15 to 20, **characterized in that**, before the agglomeration (VF6), the light material fraction (LF1-LG) is fed to a buffer (P).

22. Process according to at least one of the preceding Claims 6 to 21, **characterized in that**, after the cleaning (VF5), the light material fraction (LF1-LG) is subjected to a pelletizing operation (VF6').

23. Process according to at least one of the preceding Claims 6 to 22, **characterized in that**, after the cleaning (VF5), the light material fraction (LF1-LG) is subjected to a briquetting operation (VF16").

24. Process according to at least one of the preceding claims, **characterized in that** the light material fraction (LF1-LG) obtained by the separation (VF4) is brought together with at least one of the light fraction classes (LF2) obtained by the prior sorting (VF3).

25. Process according to at least one of the preceding Claims 15 to 24, **characterized in that**, after the agglomeration (VF6), the agglomerate is subjected to a gas-based extraction of harmful substances.

26. Installation for treating a light fraction (LF) produced during the treatment of scrap (KA) that has a low metal content and a high plastic content, **characterized in that** means (MA2, HM, SE, WSR, TT, RE, AGE, KE, TE, MA3) with which the following process steps can be carried out one after the other are provided:
- applying stress (VF2) to the light fraction (LF) by means of impact and/or shock,
- classifying (VF3) the light fraction into at least two light fraction classes (LF1 and LF2),
- separating (VF4) at least one light fraction class (LF1) into at least one dust fraction (STF1) and at least one further fraction (LF1-LG, LF1-SG), a separation (VF41) of the dust fraction (STF1) taking place over a substantially controlled retention time of the light fraction class (LF1) in at least one process means (WSR) taking part in the separation (VF41).

27. Installation according to Claim 26, **characterized in that** means for controllable suction extraction of the dust fraction (STF1) are provided in the process means (WSR) involved in the separation (VF41).

28. Installation according to Claim 26 or 27, **characterized in that** the means (WSR) involved in the separation (VF41) comprises a zigzag-shaped suction-extraction channel.

29. Installation according to at least one of the preceding Claims 27 and 28, **characterized in that** the means for controllable dust extraction comprise at least one frequency-controlled blower.

30. Installation according to at least one of the preceding Claims 26 to 29, **characterized in that** downstream of the process means (WSR) involved in the separation (VF41) is at least one separating table (TT), which separates (VF42) the remaining fraction segregated after the separation (VF41) into at least one light material fraction (LF1-LG) and one heavy material fraction (LF1-SG).

31. Installation according to Claim 30, **characterized in that** the separating table (TT) is adjustable with regard to its air stream acting on the material to be separated and/or its vibrational amplitude and/or its inclination.

32. Installation according to at least one of the preceding Claims 26 to 31, **characterized in that** the means (HM) for applying stress (VF2) to the light fraction (LF) by means of impact and/or shock are provided in the form of at least one rotor impact mill or at least one hammer mill.

33. Installation according to Claim 32, **characterized in that**, when a rotor impact mill is used, the distance between the stator and the rotor is between 3 mm and 5 mm.

34. Installation according to Claim 32, **characterized in that**, when a hammer mill is used, the screen perforation thereof has a hole diameter of between 8 and 15 mm and the striking tools thereof are between 6 mm and 14 mm wide.

35. Installation according to at least one of the preceding Claims 26 to 34, **characterized in that** upstream of the means (HM) for applying stress (VF2) to the light fraction (LF) by means of impact and/or shock are means (MA2) for segregating ferromagnetic constituents (FE).

36. Installation according to at least one of the preceding Claims 26 to 35, **characterized in that** downstream of the means (HM) for applying stress (VF2) to the light fraction (LF) by means of impact and/or shock is a classifying device in the form of a screening device (SE) with a perforation of approximately 5-8 mm.

37. Installation according to at least one of the preceding Claims 30 to 36, **characterized in that** downstream of the separating table (TT) are means (RE) for surface cleaning at least the light material fraction (LF1-LG).

38. Installation according to Claim 37, **characterized in that** downstream of the means (RE) for surface cleaning is an agglomeration device (AGE).

39. Installation according to Claim 38, **characterized in that** upstream of the agglomeration device (AGE) is a buffer (P).

40. Installation according to at least one of the preceding Claims 38 and 39, **characterized in that** downstream of the agglomeration device (AGE) are means for cooling and drying (KE, TE).

41. Installation according to at least one of the preceding Claims 38 to 40, **characterized in that** downstream of the agglomeration device (AGE) are means (MA3) for ferromagnetic material separation.

42. Installation according to at least one of the preceding Claims 38 to 41, **characterized in that** means by which the agglomerate can be subjected to a gas-based extraction of harmful substances after the agglomeration are provided.

## Revendications

1. Procédé de préparation d'une fraction légère (LF) qui a été formée pendant le traitement de déchets (KA) pauvres en métaux et riches en matière synthétique, le procédé présentant les étapes suivantes :
application (VF2) de percussions et/ou d'impacts sur la fraction légère (LF),
criblage (VF3) de la fraction légère (LF) en au moins deux classes (LF1 et LF2) de fraction légère,
séparation (VF4) d'au moins une classe (LF1) de fraction légère en au moins une fraction de poussière (STF1) et au moins une autre fraction (LF1-LG, LF1-SG),
une séparation (VF41) de la fraction de poussière (STF1) s'effectuant essentiellement par l'intermédiaire du contrôle du temps de séjour de la classe (LF1) de fraction légère dans au moins un moyen de traitement (WSR) qui participe à la séparation (VF41).

2. Procédé selon la revendication 1, **caractérisé en ce que** le temps de séjour de la classe (LF1) de fraction légère dans le moyen de traitement (WSR) est contrôlé par l'intermédiaire d'une aspiration réglable.

3. Procédé selon la revendication 2, **caractérisé en ce que** l'aspiration présente un débit d'air d'aspiration qui est régulé en fonction de la densité de la ou des classes (LF1) de fraction légère.

4. Procédé selon la revendication 3, **caractérisé en ce que** la vitesse de l'écoulement d'air d'aspiration est régulée de manière proportionnelle à la densité de la ou des classes (LF1) de fraction légère.

5. Procédé selon au moins l'une des revendications 1 à 4, **caractérisé en ce qu'**en plus d'être séparée de la fraction de poussière (STF1), la classe (LF1) de fraction légère est séparée (VF42) en au moins une fraction (LF1-LG) de matière légère et une fraction (LF1-SG) de matière lourde.

6. Procédé selon la revendication 5, **caractérisé en ce que** la ou les fractions (LF1-LG) de matière légère sont nettoyées (VF5).

7. Procédé selon la revendication 6, **caractérisé en ce que** le nettoyage (VF5) s'effectue par dépoussiérage.

8. Procédé selon au moins l'une des revendications précédentes, **caractérisé en ce que** le criblage (VF3) de la fraction légère (LF) s'effectue par tamisage à un diamètre de trous compris entre environ 5 et 8 mm.

9. Procédé selon au moins l'une des revendications précédentes, **caractérisé en ce que** par le criblage (VF3) de la fraction légère (LF), on forme au moins une première classe (LF1) de fraction légère dont les particules ont une taille < 5 à 8 mm et une deuxième classe (LF2) de fraction légère dont les particules ont une taille moyenne > 5 à 8 mm.

10. Procédé selon au moins l'une des revendications précédentes, **caractérisé en ce que** la fraction (LF1-LG) de matière légère obtenue par la séparation (VF4) présente en moyenne une masse spécifique en vrac de < 250 kg/m³ et la fraction (LF1-SG) de matière lourde en moyenne une masse spécifique en vrac > 250 kg/m³.

11. Procédé selon au moins l'une des revendications précédentes, **caractérisé en ce que** la fraction légère (LF) est une fraction légère riche en fibres.

12. Procédé selon les revendications 1 ou 2, **caractérisé en ce que** les déchets pauvres en métaux et riches en matière synthétique sont au moins en partie des déchets contenant des métaux provenant de résidus de déchiquetage.

13. Procédé selon au moins l'une des revendications précédentes, **caractérisé en ce que** pour former la fraction légère (LF), au moins les étapes (V1 à V7) suivantes sont exécutées successivement pendant la préparation des déchets (KA) pauvres en métaux et riches en matière synthétique :
séparation (V1) des composants ferromagnétiques (FE),
séparation (V2) d'une première fraction (RS1) de sable brut,
séparation (V3) des composants métalliques non ferromagnétiques (NE),
séparation (V4) des composants grossiers (SG),
déchiquetage (V5),
séparation (V6) d'une deuxième fraction (RS2) de sable brut,
tri (V7) en au moins une fraction légère (LF) et une fraction lourde (SF).

14. Procédé selon au moins l'une des revendications précédentes, **caractérisé en ce qu'**une séparation (VF1) des FE s'effectue avant le traitement (VF2) par percussion.

15. Procédé selon au moins l'une des revendications 6 à 14, **caractérisé en ce que** la fraction (LF1-LG) de matière légère subit une agglomération (VF6) avant son nettoyage (VF5).

16. Procédé selon la revendication 15, **caractérisé en ce que** l'agglomération (VF6) s'effectue entre environ 100°C et 180°C.

17. Procédé selon au moins l'une des revendications 15 et 16 qui précèdent, **caractérisé en ce que** la fraction (LF1-LG) de matière légère est encore refroidie (VF7) après l'agglomération (VF6).

18. Procédé selon la revendication 17, **caractérisé en ce que** le refroidissement (VF7) s'effectue sensiblement à température ambiante.

19. Procédé selon au moins l'une des revendications 15 à 18 qui précèdent, **caractérisé en ce que** la fraction (LF1-LG) de matière légère est encore séchée (VF8) après l'agglomération (VF6).

20. Procédé selon au moins l'une des revendications 15 à 19 qui précèdent, **caractérisé en ce que** la fraction (LF1-LG) de matière légère subit une séparation (VF9) de métaux après l'agglomération (VF6).

21. Procédé selon au moins l'une des revendications 15 à 20 qui précèdent, **caractérisé en ce que** la fraction (LF1-LG) de matière légère est amenée à un tampon (P) avant l'agglomération (VF6).

22. Procédé selon au moins l'une des revendications 6 à 21 qui précèdent, **caractérisé en ce que** la fraction (LF1-LG) de matière légère subit une pelletisation (VF6') après le nettoyage (VF5).

23. Procédé selon au moins l'une des revendications 6 à 22 qui précèdent, **caractérisé en ce que** la fraction (LF1-LG) de matière légère subit une transformation (VF6") en briquettes après le nettoyage (VF5).

24. Procédé selon au moins l'une des revendications précédentes, **caractérisé en ce que** la fraction (LF1-LG) de matière légère obtenue par la séparation (VF4) est réunie avec au moins une des classes (LF2) de fraction légère obtenue par le tri (VF3) qui précède.

25. Procédé selon au moins l'une des revendications 15 à 24 qui précèdent, **caractérisé en ce que** l'aggloméré subit une extraction au gaz des produits toxiques après l'agglomération (VF6).

26. Installation de préparation d'une fraction légère (LF) qui a été formée par le traitement de déchets (KA) pauvres en métaux et riches en matière synthétique, **caractérisée en ce qu'**elle présente des moyens (MA2, HM, SE, WSR, TT, RE, AGE, KE, TE MA3) qui permettent de mettre en oeuvre successivement les étapes de traitement suivantes :
application (VF2) de percussions et/ou d'impacts sur la fraction légère (LF),
criblage (VF3) de la fraction légère (LF) en au moins deux classes (LF1 et LF2) de fraction légère,
séparation (VF4) d'au moins une classe (LF1) de fraction légère en au moins une fraction de poussière (STF1) et au moins une autre fraction (LF1-LG, LF1-SG),
une séparation (VF41) de la fraction de poussière (STF1) s'effectuant essentiellement par l'intermédiaire du contrôle du temps de séjour de la classe (LF1) de fraction légère dans au moins un moyen de traitement (WSR) qui participe à la séparation (VF41).

27. Installation selon la revendication 26, **caractérisée en ce que** le moyen de traitement (WSR) qui participe à la séparation (VF41) présentent des moyens d'aspiration réglables de la fraction de poussière (STF1).

28. Installation selon les revendications 26 ou 27, **caractérisée en ce que** le moyen (WSR) qui participe à la séparation (VF41) comporte un canal d'aspiration en zigzag.

29. Installation selon au moins l'une des revendications 27 à 28 qui précèdent, **caractérisée en ce que** les moyens d'aspiration réglables des poussières comprennent au moins un ventilateur commandé en fréquence.

30. Installation selon au moins l'une des revendications 26 à 29 qui précèdent, **caractérisée en ce que** le moyen de traitement (WSR) qui participe à la séparation (VF41) est suivi par au moins une table de séparation (TT) qui sépare la fraction résiduelle séparée après la séparation (VF41) en au moins une fraction (LF1-LG) de matière légère et une fraction (LF1-SG) de matière lourde (VF42).

31. Installation selon la revendication 30, **caractérisée en ce que** l'écoulement d'air qui agit sur la matière à séparer, l'amplitude des secousses et/ou l'inclinaison de la table de séparation (TT) peuvent être réglées.

32. Installation selon au moins l'une des revendications 26 à 31 qui précèdent, **caractérisée en ce que** les moyens (HM) qui appliquent (VF2) une percussion et/ou des impacts sur la fraction légère (LF) sont prévus sous la forme d'au moins un broyeur à rotor ou au moins un broyeur à marteaux.

33. Installation selon la revendication 32, **caractérisée en ce que** lorsqu'un broyeur à rotor est utilisé, la distance entre le stator et le rotor est comprise entre 3 mm et 5 mm.

34. Installation selon la revendication 32, **caractérisée en ce que** lorsqu'un broyeur à marteaux est utilisé, ses perforations de tamisage présentent des trous d'un diamètre compris entre 8 et 15 mm et ses outils de percussion d'une largeur comprise entre 6 mm et 14 mm.

35. Installation selon au moins l'une des revendications 26 à 34 qui précèdent, **caractérisée en ce que** les moyens (HM) d'application (VF2) de percussions et/ou d'impacts sur la fraction légère (LF) sont précédés par des moyens (MA2) de séparation des composants ferromagnétiques (FE).

36. Installation selon au moins l'une des revendications 26 à 35 qui précèdent, **caractérisée en ce que** les moyens (HM) d'application (VF2) de percussions et/ou d'impacts sur la fraction légère (LF) sont suivis par un dispositif de criblage qui présente la forme d'un dispositif de tamisage (SE) dont les trous sont d'environ 5 à 8 mm.

37. Installation selon au moins l'une des revendications 30 à 36 qui précèdent, **caractérisée en ce que** la table de séparation (TT) est suivie par des moyens (RE) de nettoyage de surface d'au moins la fraction (LF1-LG) de matière légère.

38. Installation selon la revendication 37, **caractérisée en ce que** les moyens (RE) de nettoyage de surface sont suivis par un dispositif d'agglomération (AGE).

39. Installation selon la revendication 38, **caractérisée en ce que** le dispositif d'agglomération (AGE) est précédé par un tampon (P).

40. Installation selon au moins l'une des revendications 38 à 39 qui précèdent, **caractérisée en ce que** le dispositif d'agglomération (AGE) est suivi par des moyens de refroidissement et de séchage (KE, TE).

41. Installation selon au moins l'une des revendications 38 à 40 qui précèdent, **caractérisée en ce que** le dispositif d'agglomération (AGE) est suivi par des moyens (MA3) de séparation de métaux ferromagnétiques.

42. Installation selon au moins l'une des revendications 38 à 41 qui précèdent, **caractérisée en ce qu'**elle présente des moyens qui permettent de faire subir à l'aggloméré une extraction au gaz de substances toxiques après l'agglomération.
